# EUROPÄISCHE PATENTANMELDUNG

(11) **EP 2 236 860 A2**
(43) Veröffentlichungstag der Anmeldung: **06.10.2010**
(21) Anmeldenummer: 10157954.8
(22) Anmeldetag: 26.03.2010
(51) Int. Cl.: F16H 48/16, F16D 41/06

(54) **Mechanische Schlupfsperre**

(30) Priorität: 03.04.2009 AT 2102009 U
(71) Anmelder: Ackerl, Franz, 1060 Wien (AT)
(72) Erfinder: Ackerl, Franz, 1060 Wien (AT)
(74) Vertreter: KLIMENT & HENHAPEL

(57) **Zusammenfassung**

Mechanische Schlupfsperre für Antriebsräder von mehrspurigen Fahrzeugen, umfassend
- zumindest eine rotierbare, von einem Antrieb antreibbare Sperrwelle,
- zwei zur Sperrwelle koaxiale Halbachswellen (6, 7), wobei eine Halbachswelle (6, 7) jeweils ein Antriebsrad antreiben kann,
- für jede Halbachswelle (6, 7) zwei zur Sperrwelle koaxiale Überholkupplungen (8, 9), welche in entgegengesetzten Drehrichtungen sperren, wobei die Überholkupplungen (8, 9) jeweils die Verbindung ihrer Halbachswelle zur antreibenden Sperrwelle (3) bilden,
- eine mechanische Schaltvorrichtung (10, 11) als Verbindung zwischen den vorwärts sperrenden (8) und rückwärts sperrenden (9) Überholkupplungen, welche sicherstellt, dass die rückwärts sperrenden Überholkupplungen (9) in gelöster Stellung gehalten werden, solange zumindest eine der vorwärts sperrenden Überholkupplungen (8) durch die Sperrwelle gesperrt ist und dass die vorwärts sperrenden Überholkupplungen (8) in gelöster Stellung gehalten werden, solange zumindest eine rückwärts sperrende Überholkupplung (9) durch die Sperrwelle gesperrt ist.

## Beschreibung

Die Erfindung bezieht sich auf eine mechanische Schlupfsperre für Antriebsräder von mehrspurigen Fahrzeugen.

### STAND DER TECHNIK

Aus dem Stand der Technik sind verschiedene Vorrichtungen bekannt, die das Durchdrehen, also das Schlupfen, von Antriebsrädern zweispuriger Fahrzeuge bei Antriebsmomentüberschuss eines Rades verhindern sollen. Nach dem Stand der Technik kommen als solche Vorrichtungen Sperrdifferentiale und elektronische Antriebsschlupfregelungen in Frage. Bei Sperrdifferentialen wird dieser unerwünschte Effekt durch form- oder kraftschlüssiges Sperren eines - den Antrieb auf beide Antriebsräder aufteilenden - Ausgleichsgetriebes abgebaut. Verwendet werden:
- Drehmomentfühlende Sperrdifferentiale, bei denen auf die Seite mit geringerem Schlupf das mehrfache Drehmoment der anderen Seite übertragen wird.
- Drehzahlfühlende Sperrdifferentiale, bei denen die Sperrwirkung von der Differenzdrehzahl der Räder abhängt.
- Zuschaltbare Festwertsperren, bei denen die Räder auch ohne Differenzdrehzahl gegeneinander gesperrt werden.

Soweit diese Sperrdifferentiale mechanisch wirken, haben sie vielfältige Nachteile, wie:
- Starken Verschleiß bei Sperrdifferentialen mit mechanischen, auf das Ausgleichsgetriebe wirkenden Bremsen und bei verschiedenem Abrollumfang der Räder; bei Festwertsperren Verspannung des Antriebsstranges und Abhängigkeit vom Eingreifen des Fahrers;
- Inkompatibilität mit Antiblockiersystemen;
- verstärktes Unter- oder Übersteuern bei Kurvenfahrt mit geringem Radschlupf.

Elektronisch gesteuerte Antriebsschlupfregelungen werden als zusätzliche Einrichtungen zu Differentialen verwendet.

Nachteile dieser Antriebsschlupfregelungen sind:
- Verlust an Motorleistung durch die Bremswirkung;
- Geringe Regelgüte;
- Abhängigkeit vom Elektroniksystem.

Aus der US 5 307 911 A ist eine Zweiweg-Freilaufkupplung bekannt, welche von einer Antriebsrichtung in eine dazu entgegengesetzte Antriebsrichtung umgeschaltet werden kann.

Ein hierbei vorgesehener Kupplungsmechanismus umfasst eine Antriebswelle, wobei mindestens ein überragender Teil dieser Antriebswelle zu einer Profilsehne mit der Rotationsachse der genannten Antriebswelle ausgebildet ist, wobei die angetriebene Welle konzentrisch zur Rotationsachse der Antriebswelle eine Höhlung enthält und drehbar zur Rotationsachse montiert ist. Die Höhlung weist eine konzentrisch zur Rotationsachse verlaufende, zylindrische Innenfläche auf und umschließt die Antriebswelle über eine axiale Länge dieser Antriebswelle, an welcher sich zumindest ein flacher Abschnitt befindet, wobei zwischen diesem flachen Abschnitt und der zylindrischen Innenfläche ein Lagerelement eingeschlossen ist. Die Achse dieses Lagerelementes verläuft im Wesentlichen parallel zur genannten Rotationsachse, wobei das Lagerelement einen runden Umfang hat und wobei der Durchmesser des Lagerelementes größer ist als der Abstand vom flachen Abschnitt und der zylindrischen Innenfläche zu den radialen Endbereichen der genannten Profilsehne des flachen Abschnitts, jedoch kleiner als der Abstand vom flachen Abschnitt zu der zylindrischen Innenfläche in der Mitte des genannten, profilsehnenbildenden Abschnitts zwischen den radialen Endbereichen. Vorzugsweise findet eine Mehrzahl von flachen Abschnitten und Klemmrollen Einsatz.

Die GB 1 271 574 A offenbart einen Fahrradfreilauf zur Erzielung eines möglichst unmittelbaren, spielfreien Antriebes, wobei die Reibung während des Freilaufes niedrig gehalten wird. Ein freilaufendes Antriebsrad eines Fahrrades umfasst hierbei einen ringförmigen Antriebsteil und einen im Antriebsteil koaxial angeordneten angetriebenen Teil, wobei Klemmrollen in keilförmigen Aufnahmen zwischen diesen Teilen angeordnet sind. Diese Klemmrollen sind in einem Käfig gehalten, wobei eine Feder mit einem Ende am Antriebsteil und mit dem anderen Ende am Käfig befestigt ist, wobei dann, wenn das Antriebsrad von der Tretkurbel über Kette und Kettenrad in Fahrtrichtung gedreht wird, die Klemmrollen über den mit ihr verbundenen Käfig in Klemmposition zwischen Antriebsteil und angetriebenem Teil geführt werden, den Antrieb herstellen, und die Feder gespannt wird, hingegen bei Stillstand der Tretkurbel oder deren Zurücktreten die Feder entspannt wird, und die Klemmrollen in Erweiterungen ihrer Aufnahmen geführt werden, wodurch der Anpressdruck der Klemmrollen gelöst wird, und das Rad freiläuft. Die Feder soll hierbei ein allmähliches Einkuppeln des Antriebes ermöglichen, während die Erweiterungen in den Aufnahmen die Rollreibung herabsetzen sollen.

### DARSTELLUNG DER ERFINDUNG

Der vorliegenden Erfindung liegt die Aufgabe zugrunde, die oben genannten Nachteile zu vermeiden und eine hinsichtlich konstruktiver und funktioneller Eigenschaften verbesserte mechanische Schlupfsperre bereitzustellen, welche das einseitige Durchdrehen von Antriebsrädern verhindert.

Insbesondere soll ohne jegliche Reibungsverluste und ohne Verspannung des Antriebsstranges das gesamte Antriebsmoment für die Fortbewegung des Fahrzeuges genutzt werden, dies unabhängig von einem aufwändigen und fehlerempfindlichen elektronischen System.

Es soll bei Radschlupf eine Sperre zwischen den Antriebsrädern unabhängig vom Eingreifen des Fahrers und nur bei Bedarf, also vollautomatisch, eintreten.

Es sollen Antriebsmomentüberschüsse zwischen den Antriebsrädern vermieden und die Fahrstabilität gewährleistet werden.

Es sollen die Kosten für die Herstellung einer solchen Antriebsschlupfregelung ihrem Nutzen angemessen sein.

Erfindungsgemäß werden diese Ziele durch den Einsatz einer mechanischen Schlupfsperre nach Anspruch 1 erreicht, welche folgende Merkmale umfasst:
- zumindest eine rotierbare, insbesondere als Hohlwelle ausgebildete Sperrwelle, die von einem Antrieb des Fahrzeugs antreibbar ist,
- zwei zur Sperrwelle koaxiale Halbachswellen, wobei eine Halbachswelle jeweils ein Antriebsrad antreiben kann,
- für jede Halbachswelle zwei zur Sperrwelle koaxiale Überholkupplungen, welche in entgegengesetzten Drehrichtungen sperren, wobei die Überholkupplungen jeweils die Verbindung ihrer Halbachswelle zur antreibenden Sperrwelle bilden und wobei die Sperrpositionen der vorwärts sperrenden Überholkupplungen gegenüber jenen der rückwärts sperrenden Überholkupplungen versetzt sind,
- eine mechanische Schaltvorrichtung als Verbindung zwischen den vorwärts sperrenden und rückwärts sperrenden Überholkupplungen, welche sicherstellt, dass die rückwärts sperrenden Überholkupplungen in gelöster Stellung gehalten werden, solange zumindest eine der vorwärts sperrenden Überholkupplungen aufgrund des Antriebs durch die Sperrwelle gesperrt ist und dass die vorwärts sperrenden Überholkupplungen in gelöster Stellung gehalten werden, solange zumindest eine rückwärts sperrende Überholkupplung aufgrund des Antriebs durch die Sperrwelle gesperrt ist.

Gemäß der Erfindung tritt an die Stelle des herkömmlichen Differentials mit Planetenrädern ein System aus gegeneinander sperrenden Überholkupplungen.

Eine Überholkupplung (oder Freilauf) ist eine Vorrichtung, die einen Antrieb (hier: die Sperrwelle) von der Drehbewegung (hier: die Drehbewegung der Halbachswelle) entkoppelt, wenn sich die Lastverhältnisse ändern: stimmen die Drehrichtung des Antriebs und der Halbwelle überein, so sperrt die Überholkupplung und das Drehmoment des Antriebs (der Sperrwelle) wird auf die Halbachswelle übertragen. Ist jedoch die Drehzahl der Halbachswelle größer als jene des Antriebs oder sind die Drehrichtungen verschieden, dann öffnet die Überholkupplung und es wird kein Drehmoment vom Antrieb (der Sperrwelle) auf die Halbachswelle übertragen, die Halbachswelle befindet sich im Freilauf, die Überholkupplung ist gelöst.

Mit dem Begriff "vorwärts sperrende Überholkupplung" ist eine Überholkupplung gemeint, die so montiert ist, dass bei Drehung der Sperrwelle in Antriebsrichtung vorwärts, also wenn das Fahrzeug aufgrund des Antriebs vorwärts fährt, die Kupplung sperrt, also Drehmoment vom Antrieb auf die Halbachswelle überträgt. Bei Drehung der Sperrwelle in Antriebsrichtung rückwärts, also wenn das Fahrzeug aufgrund des Antriebs rückwärts fährt, dann öffnet die Überholkupplung und die Halbachswelle befindet sich im Freilauf.

Analog ist mit dem Begriff "rückwärts sperrende Überholkupplung" eine Überholkupplung gemeint, die so montiert ist, dass bei Drehung der Sperrwelle in Antriebsrichtung vorwärts, also wenn das Fahrzeug aufgrund des Antriebs vorwärts fährt, die Überholkupplung öffnet und sich die Halbachswelle im Freilauf befindet. Bei Drehung der Sperrwelle in Antriebsrichtung rückwärts, also wenn das Fahrzeug aufgrund des Antriebs rückwärts fährt, dann sperrt die Überholkupplung, es wird also Drehmoment vom Antrieb auf die Halbachswelle übertragen.

Da die inneren rotierenden Teile der Überholkupplungen fest mit der Sperrwelle verbunden sind, sind alle Sperrpositionen der einzelnen Überholkupplungen in unveränderlichem Winkel zueinander und zur Sperrwelle festgelegt. Die Sperrpositionen der beiden vorwärts sperrenden Überholkupplungen sind dabei gleich, ebenso die Sperrpositionen der beiden rückwärts sperrenden Überholkupplungen.

Sind beispielsweise die Überholkupplungen mit Klemmrollen als Kupplungselementen ausgeführt, so fluchten jeweils die Klemmrollen der beiden vorwärts sperrenden Überholkupplungen und jene der beiden rückwärts sperrenden Überholkupplungen.

Ein Ausgleichsgetriebe ist aufgrund der Erfindung entbehrlich. Trotz Entfallens des Ausgleichsgetriebes ist die Übertragung des Antriebes auf die Antriebsräder in jeder Fahrsituation zwangsgesteuert. Die Sperrwelle überträgt den Antrieb nach Bedarf auf eine oder beide Halbachswellen und stellt bei Radschlupf eine 100-%-Sperre her. Die mechanische Schaltvorrichtung, die als Schaltwelle mit Mitnehmern ausgeführt sein kann, verhindert unerwünschtes Sperren des bogenäußeren Rades bei Kurvenfahrten.

Bei Geradeausfahrt in Vorwärtsrichtung werden die Kupplungselemente der vorwärts schließenden Überholkupplungen gegen die Antriebsrichtung in die Sperrpositionen geführt. Die Sperrwelle wird mit den beiden Halbachswellen verbunden und bildet mit diesen eine Starrachse. Verliert ein Antriebsrad die Bodenhaftung, dann wirkt die gesamte Antriebskraft in Antriebsrichtung weiterhin auf das andere Rad, weil der Waagebalkeneffekt des Ausgleichsgetriebes entfällt.

Eine Ausführungsform der Erfindung sieht vor, dass die Überholkupplungen Kupplungselemente aufweisen, welche die zugehörige Überholkupplung überragen und dass die mechanische Schaltvorrichtung neben den Überholkupplungen koaxial zur Sperrwelle angeordnete, dieser gegenüber bewegliche Mitnehmer aufweist, welche alle über eine zur Sperrwelle koaxiale Schaltwelle starr miteinander verbunden sind, wobei die Mitnehmer für die überragenden Bereiche der Kupplungselemente Aufnahmen aufweisen, welche die Kupplungselemente der rückwärts sperrenden Überholkupplungen in gelöster Stellung halten, solange zumindest die Kupplungselemente einer vorwärts sperrenden Überholkupplung aufgrund des Antriebs durch die Sperrwelle in Sperrposition sind und welche auch umgekehrt die Kupplungselemente der vorwärts sperrenden Überholkupplungen in gelöster Stellung halten, solange zumindest die Kupplungselemente einer rückwärts sperrenden Überholkupplung aufgrund des Antriebs durch die Sperrwelle in Sperrposition sind.

Dies kann etwa dadurch verwirklicht werden, dass in zumindest einem Mitnehmer so viele Aufnahmen vorgesehen sind wie eine Überholkupplung Kupplungselemente hat und die Aufnahmen - in Umfangsrichtung der Mitnehmer gesehen - kürzer sind als der Versatz der Sperrpositionen zwischen Kupplungselementen der vorwärts und der rückwärts sperrenden Überholkupplungen.

Die Aufnahmen können dabei zum Beispiel kreisbogenförmig sein, wobei der Radius des Kreisbogens von der Drehachse des Mitnehmers ausgeht.

Aus Gründen der Symmetrie wird in vorteilhafter Weise an beiden Seiten jeder Überholkupplung zumindest ein Mitnehmer angeordnet.

Zwischen den beiden Überholkupplungen einer Halbachswelle kann genau ein Mitnehmer angeordnet werden, dessen Aufnahmen jeweils ein Kupplungselement der vorwärts sperrenden und der rückwärts sperrenden Überholkupplung aufnimmt. Dieser Mitnehmer muss aber so breit sein, dass die überragenden Bereiche der Kupplungselemente der beiden Überholkupplungen nebeneinander zu liegen kommen können. Es könnten stattdessen aber auch zwei Mitnehmer, einer für jede Überholkupplung, direkt nebeneinander angeordnet werden, was den Vorteil hätte, dass alle Mitnehmer die gleiche Breite haben können und damit nur eine Sorte Mitnehmer gefertigt werden muss.

Die Schaltwelle wird am besten innerhalb der Sperrwelle angeordnet und verbindet mittels radial abstehender, durch radiale Schlitze in der Sperrwelle durchgreifende Bolzen, welche in die Mitnehmer ragen, alle Mitnehmer starr miteinander.

Es ist ausreichend, wenn pro Mitnehmer zwei gegeneinander um 180° versetzte Bolzen vorgesehen sind. Dies kann auch so realisiert werden, dass pro Mitnehmer ein Bolzen durch die Schaltwelle gesteckt wird, der auf beiden Seiten gleich weit aus der Schaltwelle herausragt.

Die in die Mitnehmer ragenden Enden der Kupplungselemente der vorwärts sperrenden Überholkupplungen drehen beim Schließen dieser Kupplungen die Schaltvorrichtung, bestehend aus den Mitnehmern, den in diese ragenden Bolzen und der sie tragende Schaltwelle, gegen die Antriebsrichtung. In den bogenförmigen Aufnahmen der Mitnehmer werden dadurch die Kupplungselemente aller rückwärts sperrenden Überholkupplungen gegen die Antriebsrichtung gedrückt und diese Kupplungen dadurch gelöst gehalten. Schaltwelle, Bolzen und Mitnehmer wirken damit als Schaltvorrichtung, welche das unerwünschte Sperren des äußeren Antriebsrades bei Bogenfahrt verhindert. Bei Bogenfahrt bleibt dadurch die rückwärts sperrende Überholkupplung des bogenäußeren Rades gelöst, solange der Antrieb auf das bogeninnere Rad wirkt. Verliert das bogeninnere Rad die Bodenhaftung, dann entfallen der Geschwindigkeitsüberschuss und damit der Freilauf des bogenäußeren Rades und es wirkt die Antriebskraft sofort auf das bogenäußere Rad.

Ein Überholen des Antriebes durch das Fahrzeug auf abschüssigen Strecken ist ausgeschlossen, weil bei Schub des Fahrzeuges die rückwärts sperrenden Überholkupplungen sperren.

Die erfindungsgemäße Antriebsschlupfsperre wirkt bei Rückwärtsfahrt analog zu der für die Vorwärtsfahrt beschriebenen Weise.

Für die Erfindung eignen sich als Überholkupplungen solche mit Klemmrollen als Kupplungselementen gut, weil die Klemmrollen besonders einfach durch Mitnehmer bewegt werden können. Jede Überholkupplung weist dabei als inneren, mit der Sperrwelle fest verbundenen rotierenden Teil einen Stern auf, in dessen Ausnehmungen, die sich in gleicher Richtung verjüngen, sich die als Klemmrollen ausgebildeten Kupplungselemente befinden, die mittels Federn gegen den als Käfig ausgebildeten, mit der Hohlwelle der Halbachswelle fest verbundenen äußeren rotierenden Teil der Überholkupplung gedrückt werden. Die vorgeschlagenen Überholkupplungen weisen nur geringe Unterschiede, nämlich verlängerte Kupplungselemente, zu den aus dem Stand der Technik bekannten Überholkupplungen auf.

Nach dem Stand der Technik weist eine Überholkupplungen mit Klemmrollen dabei immer einen Stern auf, dessen Ausnehmungen sich - in Umfangsrichtung des Sterns gesehen - alle in die gleiche Richtung (zur Sperrposition hin) verjüngen. Es wird sowohl für die rückwärts als auch für die vorwärts sperrende Überholkupplung ein eigener Stern vorgesehen, wobei sich die Ausnehmungen für die Klemmrollen in einem Fall immer in eine Richtung verjüngen, im anderen Fall immer in die andere Richtung. Es kann immer der gleiche Bauteil als Stern verwendet werden, er muss nur um 180° gedreht auf der Sperrwelle montiert werden.

Es ist aber auch möglich, für die beiden in entgegengesetzte Richtung sperrenden Überholkupplungen einer Halbachswelle einen einzigen Stern zu verwenden, bei dem sich - in Umfangsrichtung gesehen - aufeinanderfolgende Ausnehmungen für die Klemmrollen immer in entgegengesetzte Richtungen verjüngen. Das heißt also bei einer geraden Anzahl von Klemmrollen bzw. Ausnehmungen eines Sterns bildet jede 1,. 3., 5., ... Ausnehmung z.B. die vorwärts sperrende Überholkupplung, während jede 2., 4., 6., ... Ausnehmung dann die rückwärts sperrende Überholkupplung bildet. Diese Ausführung spart natürlich Material und Gewicht.

Grundsätzlich könnten aber auch andere Bauarten von Überholkupplungen zur Anwendung kommen, etwa solche mit Klemmkörpern.

Vorteile der Erfindung gegenüber dem Stand der Technik:
- In allen oben beschriebenen Situationen wirkt die Kraft zwingend auf den Antrieb des Fahrzeuges.
- In allen diesen Situationen wirken keine Verspannungskräfte auf den Antriebsstrang.
- In allen diesen Situationen bestehen kein Antriebsmomentüberschüsse von Antriebsrädern und daher keine Störung der Fahrzeugstabilität.
- In allen diesen Situationen bestehen keine Differenzen zwischen den Reibungswiderständen der Antriebsräder, so dass kein zusätzlicher Reibungsverschleiß eintritt.
- Unterschiedlicher Abrollumfang wirkt sich auf die Funktion der erfindungsgemäßen Antriebsschlupfsperre nicht aus.
- Die mechanische Antriebsschlupfsperre ist mit Antiblockiersystemen kompatibel.
- Die Antriebsschlupfsperre wirkt mechanisch und zuverlässig, auf eine Elektronik kann verzichtet werden.
- Es wird keine Motorleistung weggebremst.
- Verliert ein Antriebsrad die Bodenhaftung, wird sowohl bei Geradeausfahrt wie auch bei Bogenfahrt der Antrieb sofort zur Gänze auf das andere Antriebsrad umgeleitet.
- Das System wirkt als 100-%-Sperre bei Geradeausfahrt vorwärts und rückwärts.
- Ein Ausgleichsgetriebe ist nicht erforderlich.

### KURZE BESCHREIBUNG DER FIGUREN:

Die Erfindung wird nun anhand eines Ausführungsbeispieles erläutert. Dabei zeigt:
- Fig. 1: eine Schrägansicht einer erfindungsgemäßen Antriebsschlupfsperre 1;
- Fig. 2: eine Schrägansicht einer erfindungsgemäßen Antriebsschlupfsperre 1 mit geschnittener äußerer Hohlwelle 6 bei horizontaler Schnittführung;
- Fig. 3: eine Schnittansicht einer erfindungsgemäßen Antriebsschlupfsperre 1 bei vertikaler Schnittführung durch eine der Überholkupplung 8 benachbarten Mitnehmer 10 auf Höhe des Bolzens 12;
- Fig. 4: eine Schrägansicht eines Mitnehmers 10 mit Aufnahmen 14;
- Fig. 5: eine Explosionsdarstellung der Schaltwelle 11 mit Bolzen 12;
- Fig. 6: eine Schrägansicht der Sperrwellenanordnung 18, bestehend aus Sperrwelle 3 mit aufgesteckten Überholkupplungen 8 und 9, diese bestehend aus Klemmrollen 8', 9', Käfig 8", 9" und Stern 8"', 9"';
- Fig. 7: eine Schrägansicht der Schaltwellenanordnung 16 mit Schaltwelle 11 und mit auf die Bolzen 12 aufgeschobenen Mitnehmern 10;
- Fig. 8: eine Schrägansicht einer Überholkupplung 8, 9, bestehend aus Klemmrollen, 8', 9', Käfig 8", 9" und Stern 8"', 9"';
- Fig. 9: eine Schnittansicht einer Überholkupplung 8,9, bestehend aus Klemmrollen, 8', 9', Käfig, 8", 9", Stern 8"', 9"' und Federn 17;
- Fig. 10: eine Darstellung der Wirkungsweise der Schaltmechanik, Überholkupplungen einer Seite ausgeblendet;
- Fig. 11: eine Darstellung der Kraftübertragung bei Geradeausfahrt vorwärts;
- Fig. 12: eine Darstellung der Kraftübertragung bei Bogenfahrt vorwärts;
- Fig. 13: eine Darstellung der Kraftübertragung bei Schiebebetrieb vorwärts;
- Fig. 14: eine Darstellung der Kraftübertragung bei Geradeausfahrt rückwärts;
- Fig. 15: eine Darstellung der Kraftübertragung bei Bogenfahrt rückwärts;
- Fig. 16: eine Darstellung der Kraftübertragung bei Schiebebetrieb rückwärts;
- Fig. 17: eine zu Fig. 8 alternative Ausführung von Überholkupplungen;
- Fig. 18: eine vergrößerte Darstellung der Überholkupplung aus Fig. 17;

### WEGE ZUR AUSFÜHRUNG DER ERFINDUNG

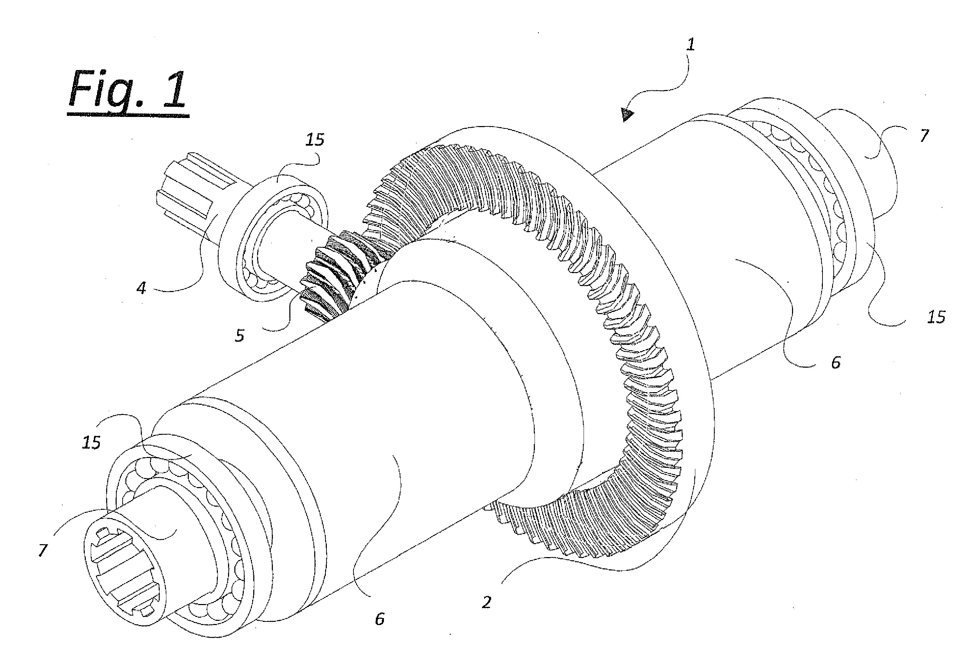

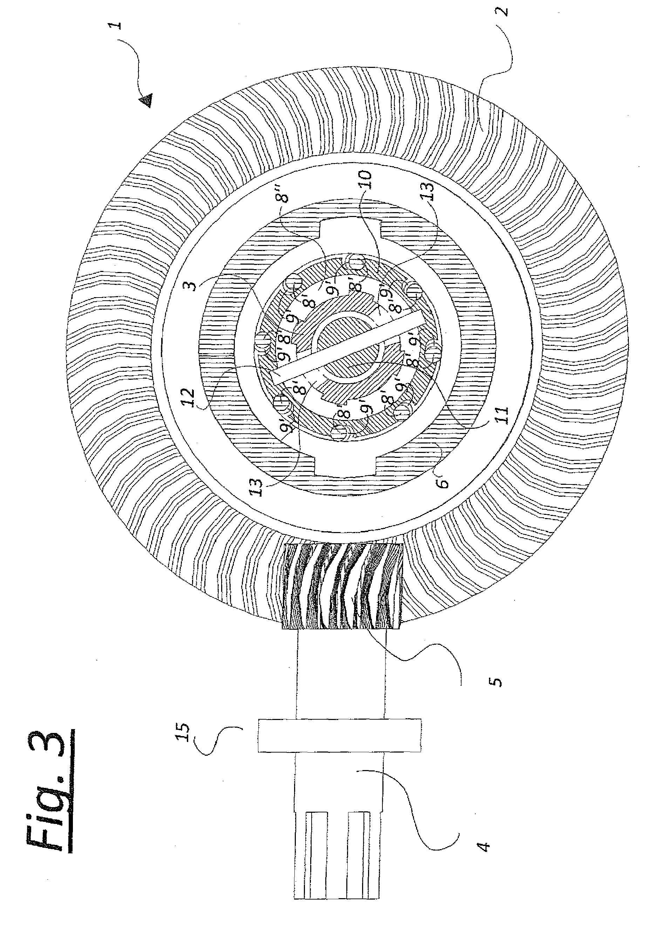

Fig. 1 zeigt eine bevorzugte Ausführungsform der erfindungsgemäßen Antriebsschlupfsperre 1 mit zwei Halbachswellen, bestehend aus Hohlwellen 6 und darin eingesteckten Steckverbindungen 7, welche als in Wälzlagern 15 gelagerte Wellen mit Aufnahmen für Steckachsen ausgebildet sind; ferner die ebenfalls in einem Wälzlager 15 gelagerte Antriebswelle 4, auf welche ein Triebling 5 aufgesteckt ist, welcher über ein Tellerrad 2 eine (nicht sichtbare) Hohlwelle (Sperrwelle 3, siehe Fig. 3) antreibt.

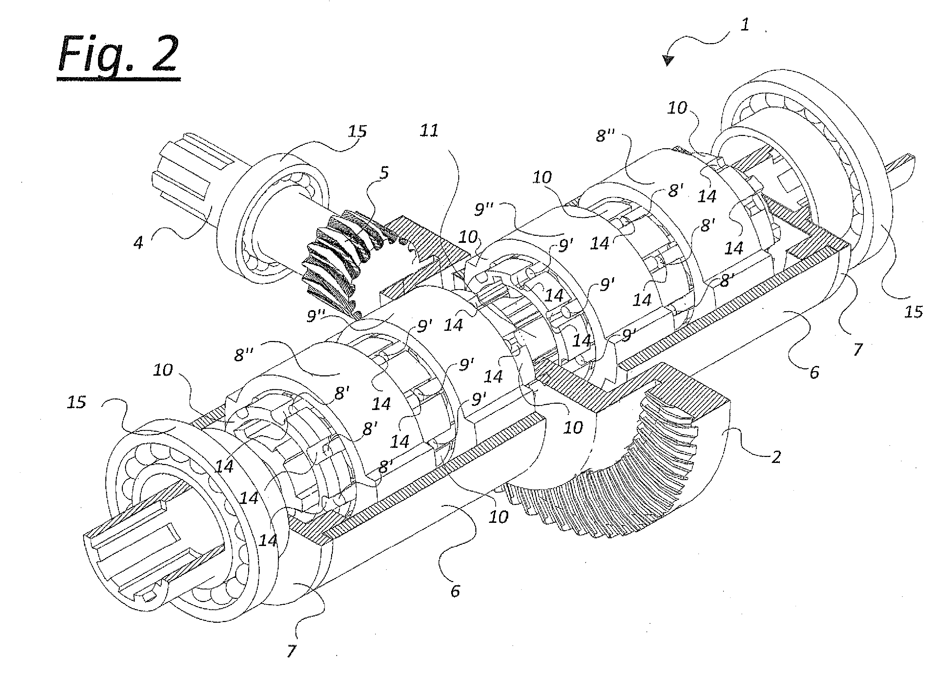

Fig. 2 zeigt diese Ausführungsform als Schrägansicht mit partiell geschnittenen Hohlwellen 6 der Halbachswellen. Von den beiderseits des Tellerrades 2 angeordneten Überholkupplungen 8, 9 sind die Kupplungselemente (Klemmrollen) 8', 9' und die Käfige 8", 9" erkennbar.

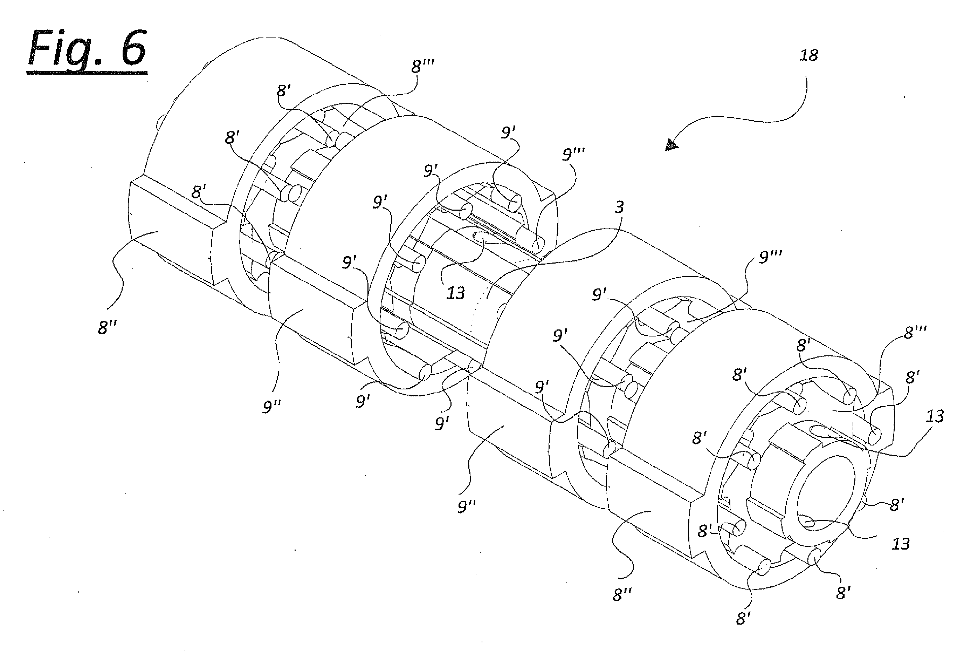

Die Funktion der einzelnen Teile der erfindungsgemäßen Antriebsschlupfsperre bei Vorwärtsfahrt geradeaus ist aus Fig. 3 erkennbar: Die in Bohrungen der frei beweglichen Schaltwelle 11 gehaltenen Bolzen 12 ragen durch Schlitze 13 der Sperrwelle 3 in Mitnehmer 10. Die Drehung der Schaltwelle 11 gegenüber der Sperrwelle 3 ist über die Länge der Schlitze 13 möglich; ebenso ist damit die Drehung der Mitnehmer 10 gegenüber dem Stern 8"' (siehe Fig. 6) der Überholkupplung 8 möglich. Die Schlitze 13 sind so lang dimensioniert und derart relativ zu den Sternen 8"' bzw. 9"' positioniert, dass die Bolzen 12 von der Sperrwelle 3 nicht berührt oder bewegt werden können.

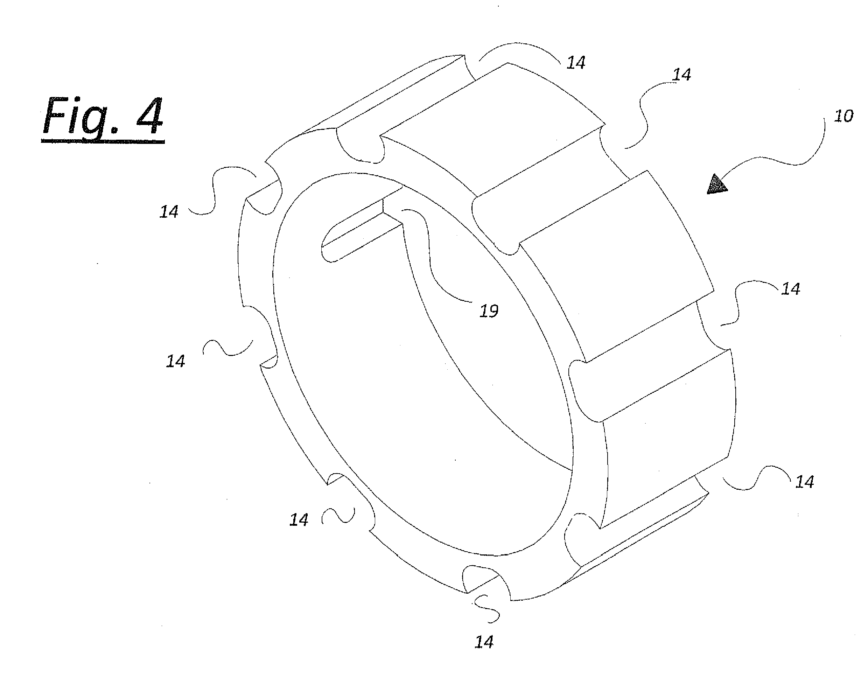

Die Klemmrollen 8' rollen bei Drehung der vom Tellerrad 2 geführten Sperrwelle 3 zwischen der Innenseite der Käfige 8" und der Sterne 8"' in Klemmstellung und führen dabei die Mitnehmer 10 gegen die Drehrichtung der Sperrwelle 3. Da in den Mitnehmern 10 die Aufnahmen (14, siehe Fig. 4) für die Klemmrollen 8' und 9' kürzer sind als die Abstände zwischen den Klemmstellungen (Sperrpositionen) der Klemmrollen 8' und 9', werden die Klemmrollen 9' - solange der Antrieb anhält - gegen die Antriebsrichtung in gelöster Stellung außerhalb der Klemmstellung (Sperrposition) gehalten. Bei Bogenfahrt kann daher das bogenäußere Rad, solange der Antrieb anhält, das bogeninnere Antriebsrad überholen, ohne dass die Überholsperre der Überholkupplung 9 ausgelöst wird.

Die für alle Überholkupplungen 8, 9 - bis auf ihre Breite - gleichen Mitnehmer 10 sind in Fig. 4 dargestellt. An ihren Innenseiten befinden sich Aufnahmen 19, in welche bei der Montage die Bolzen 12 geschoben werden. An den Außenseiten der Mitnehmer 10 befinden sich die Aufnahmen 14 für die aus den Überholkupplungen 8, 9 ragenden Klemmrollen 8', 9'. Die Aufnahmen 14 sind längs des Umfangs der Mitnehmer 10 kreisbogenförmig, verlaufen also parallel zum Umfang des Mitnehmers 10. Sie sind an den Enden abgerundet, wobei die Abrundung an die Form der Klemmrollen 8', 9' angepasst ist, um diese gut aufzunehmen. Die Aufnahmen 14 verlaufen über die gesamte Breite des Mitnehmers 10, deren Querschnitt bleibt über die gesamte Breite gleich.

Die Mitnehmer außen und innen an den Halbachsen haben zumindest eine Breite, die im Wesentlichen der Länge der die Überholkupplungen überragenden Bereiche der Klemmrollen 8', 9' entspricht. Der Mitnehmer zwischen den Überholkupplungen eine Halbachswelle ist daher zumindest doppelt so breit, weil er ja nebeneinander die überragenden Bereiche der Klemmrollen 8' der vorwärts sperrenden Überholkupplung 8 und die überragenden Bereiche der Klemmrollen 9' der rückwärts sperrenden Überholkupplung 9 aufnehmen können muss.

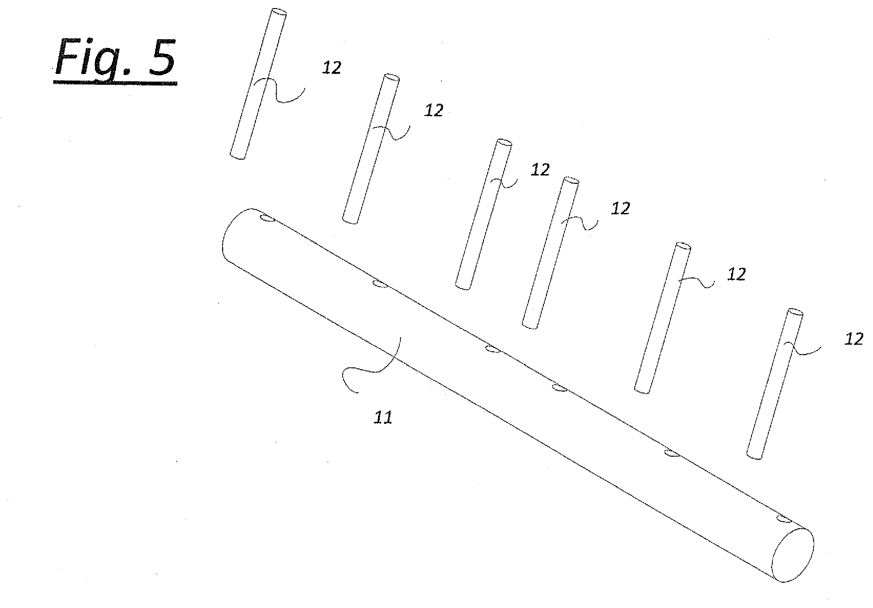

Fig. 5 zeigt eine Schaltwellenanordnung 16 mit der Schaltwelle 11 samt Bolzen 12 in Explosionsdarstellung. Die Bolzen 12 können bei der Montage erst dann in die Bohrungen der Schaltwelle 11 eingesetzt werden, wenn diese innerhalb der Sperrwelle 3 positioniert ist. Bei der Montage werden daher zuerst die dem Tellerrad 2 benachbarten Bolzen 12 in die Schaltwelle 11 eingesetzt, dann die dazu gehörenden Mitnehmer 10 über diese Bolzen 12 geschoben, dann die inneren Überholkupplungen 9 auf die Sperrwelle 3 gesteckt und dann wird dieser Vorgang nach und nach für die weiteren Bolzen 12, Mitnehmer 10, Überholkupplungen 8 und Mitnehmer 10 wiederholt.

Fig. 6 zeigt die Sperrwellenanordnung 18, bestehend aus Sperrwelle 3 und aufgesteckten Überholkupplungen 8, 9. Die Mitnehmer 10 zwischen den Überholkupplungen 8, 9 sind nicht dargestellt. Es sind die aus den Überholkupplungen 8, 9 ragenden Enden der Klemmrollen 8', 9' erkennbar.

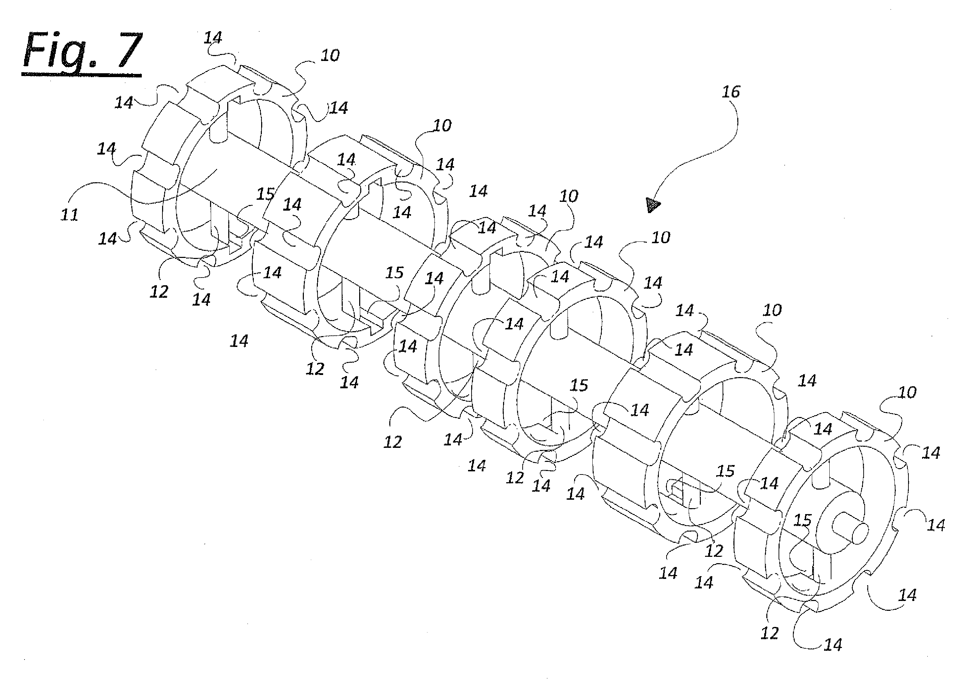

In Fig. 7 ist die Schaltwellenanordnung 16, bestehend aus Schaltwelle 11 mit Bolzen 12 und aufgeschobenen Mitnehmern 10 dargestellt. Sperrwelle 3 und Überholkupplungen 8, 9 sind ausgeblendet. Die länglichen Aufnahmen 14 für die Enden der Klemmrollen 8', 9' der Überholkupplungen sind erkennbar.

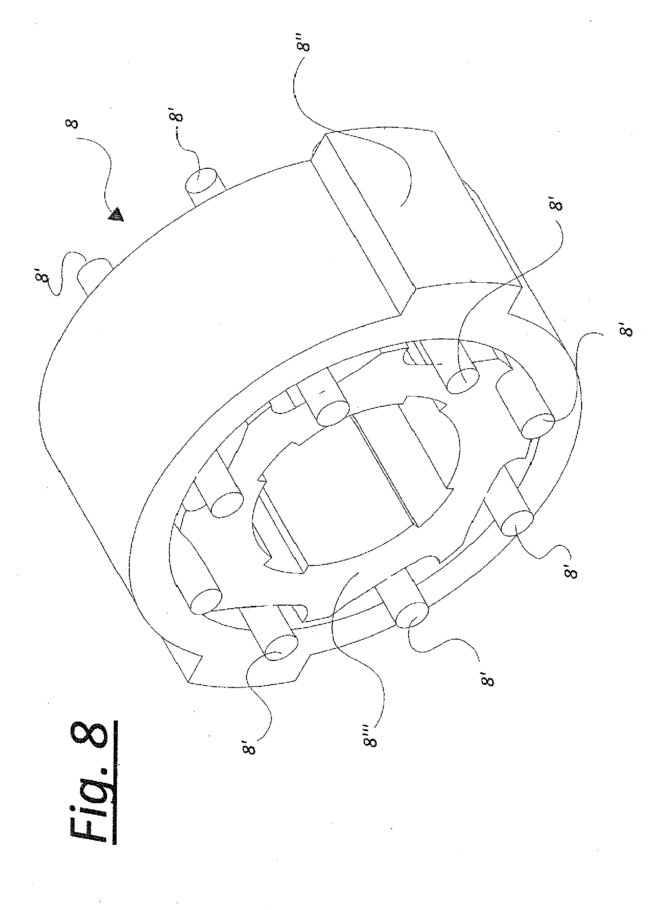

Fig. 8 zeigt eine der Überholkupplungen 8. Die Klemmrollen 8' rollen zwischen Käfig 8" und Stern 8"' bei Antrieb des Sterns 8"' durch die nicht dargestellte Sperrwelle 3 in Vorwärtsrichtung gegen die Antriebsrichtung in die Klemmstellung (Sperrposition). Die Überholkupplung 9 gleicht der Überholkupplung 8, sie wird nur um 180° gedreht montiert.

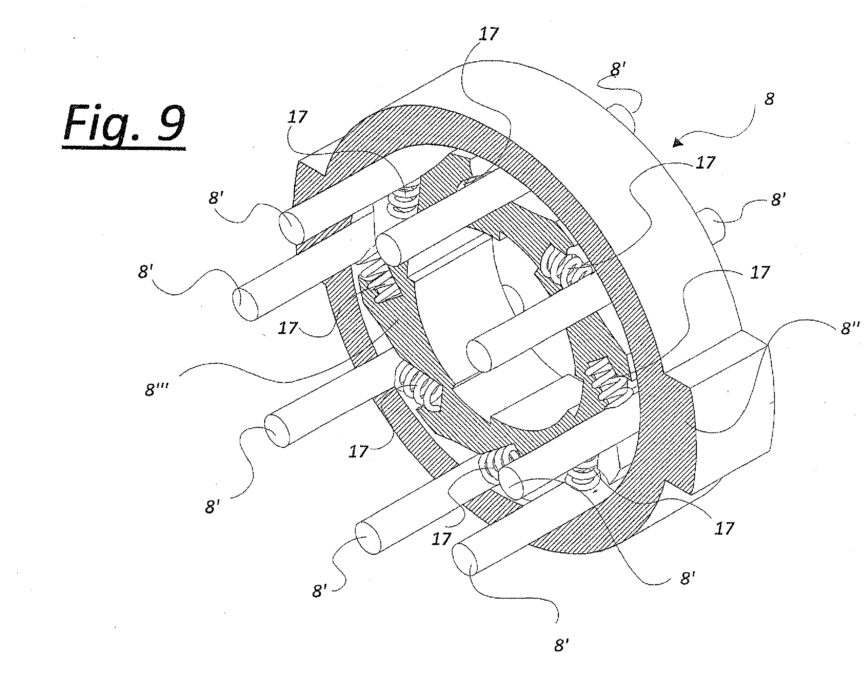

Fig. 9 zeigt eine Schnittdarstellung der Überholkupplung 8. Im Stern 8"' angeordnete Federn 17 drücken die Klemmrollen 8' gegen die Innenwand des Käfigs 8" und gewährleisten das Abrollen der Klemmrollen 8' zwischen Käfig 8" und Stern 8"'.

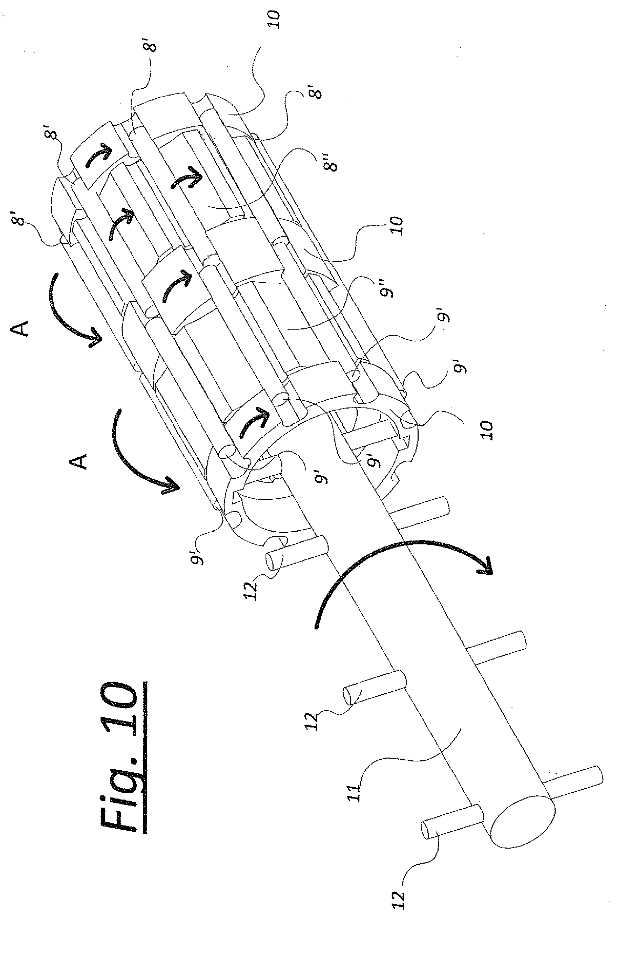

Fig. 10 zeigt die Wirkungsweise der Schaltmechanik bei Vorwärtsfahrt. Dargestellt sind die Schaltwelle 11 samt Bolzen 12 und die Mitnehmer 10 und Überholkupplungen 8, 9 auf nur einer Seite des Antriebes. Zum besseren Verständnis sind die Sperrwelle 3 und die Käfige 8" und 9" der Überholkupplungen ausgeblendet. Die Sterne 8"' der Überholkupplungen 8 drehen in Antriebsrichtung A. Die Klemmrollen 8' rollen zwischen dem nicht dargestellten Käfig 8" und dem Stern 8"' gegen die Antriebsrichtung A in die Klemmstellung (Sperrposition). Sie ziehen dabei die Mitnehmer 10 gegen die Antriebsrichtung A bis die Klemmrollen 8' die Klemmstellung (Sperrposition) erreicht haben. Die Mitnehmer 10 halten die Klemmrollen 9' der Überholkupplung 9 außerhalb ihrer Klemmstellung (Sperrposition), so dass das Überholen des Antriebes durch das bogenäußere Rad ohne Sperre ermöglicht wird.

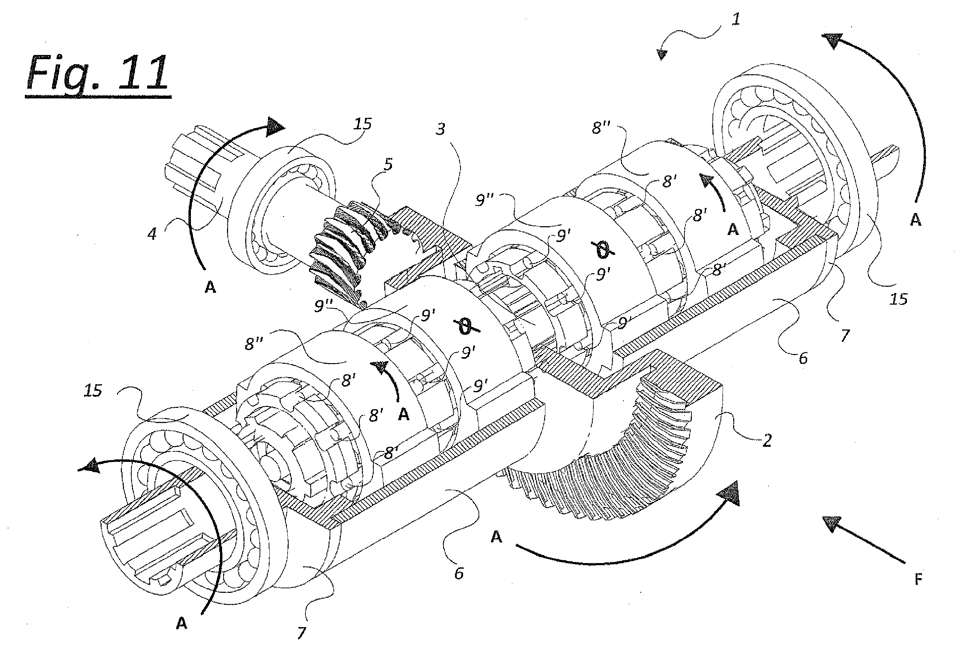

Die einzelnen Fahrsituationen werden nun in den Figuren 11 bis 16 dargestellt.

Fig. 11 zeigt die erfindungsgemäße Antriebsschlupfsperre 1 bei Geradeausfahrt vorwärts. Die Drehung der Antriebswelle 4 in Antriebsrichtung A treibt über das Tellerrad 2 die nicht sichtbare Sperrwelle 3 und mit ihr die ebenfalls nicht sichtbaren Sterne 8"' und 9"' der Überholkupplungen 8, 9 ebenfalls in Antriebsrichtung A. Die Klemmrollen 8' rollen zwischen den Käfigen 8" und den nicht dargestellten Sternen 8"' in Klemmstellung (Sperrposition). Die Käfige 8" werden nun in Antriebsrichtung A (vorwärts) gedreht und mit ihnen die Hohlwellen 6 und die Steckverbindungen 7 der Halbachswellen. Die Überholkupplungen 9 befinden sich im Freilauf Ø. Das Fahrzeug bewegt sich in Fahrtrichtung F. Durch die beiderseits des Tellerrades 2 angeordneten Überholkupplungen 8 wird eine Starrachse hergestellt. Einseitiger Schlupf eines Antriebsrades ist dadurch ausgeschlossen.

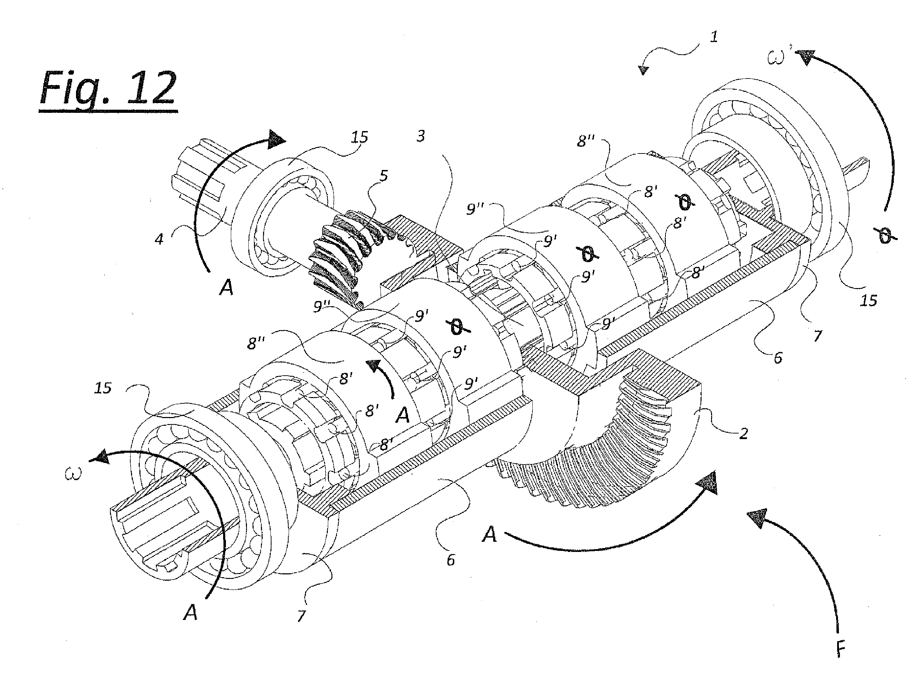

Fig. 12 zeigt die erfindungsgemäße Antriebsschlupfsperre 1 bei Bogenfahrt vorwärts. Wieder drehen die Antriebswelle 4 und mit ihr das Tellerrad 2 in Antriebsrichtung A. Diesmal wirkt der Antrieb über die bogeninnere (linke) Überholkupplung 8 auf die bogeninnere (linke) Hohlwelle 6 der Halbachswelle, die nun mit der Winkelgeschwindigkeit ω dreht. Das bogenäußere (rechte) Rad wird von der Bodenhaftung mit der größeren Winkelgeschwindigkeit ω' geführt. Dadurch wird die bogenäußere (rechte) Überholkupplung 8 gelöst; sie befindet sich im Freilauf Ø. Die Klemmrollen 8' der bogeninneren (linken) Überholkupplung 8 haben die Klemmrollen 9' der bogeninneren (linken) Überholkupplung 9 bis zum Erreichen der Klemmstellung (Sperrposition) der Klemmrollen 8' gegen die Antriebsrichtung A geführt, wodurch über die Schaltwelle 11 und die Mitnehmer 10 auch die bogenäußere (rechte) Überholkupplung 9 in gelöster Stellung gehalten wird.

Wäre die Schaltvorrichtung nicht vorhanden, so würde aufgrund der größeren Winkelgeschwindigkeit ω' der bogenäußeren (rechten) Hohlwelle 6 gegenüber jener des Antriebs der Käfig 9" der bogenäußeren (rückwärts sperrenden) Überholkupplung 9 ebenfalls den Antrieb und damit den Stern 9"' überholen. Die Klemmrollen 9' würden dabeigenauso wie bei einer Rückwärtsfahrt aufgrund des Antriebs - in ihre Klemmpositionen (Sperrpositionen) geführt werden. Somit würde einerseits der Antrieb mit seiner Winkelgeschwindigkeit auf die (bogenäußere (rechte) Hohlwelle 6 wirken, andererseits die größere Winkelgeschwindigkeit ω' des bogenäußeren Rades.

Aufgrund der Schaltvorrichtung 10, 11, 12 werden die Klemmrollen 9'jedoch außerhalb der Sperrpositionen gehalten, die bogenäußere Überholkupplung 9 befindet sich daher ebenfalls im Freilauf Ø. Die Bogenfahrt ist daher ohne Blockierung des bogenäußeren (rechten) Rades und damit ohne Reibungsverlust und ohne Antriebsstrangverspannung möglich. Wenn das bogeninnere Rad die Bodenhaftung verliert, stellt die Überholkupplung 8 des bogenäußeren Rades den Antrieb her. Einseitiger Schlupf eines Antriebsrades wird daher auch bei Bogenfahrt ausgeschlossen.

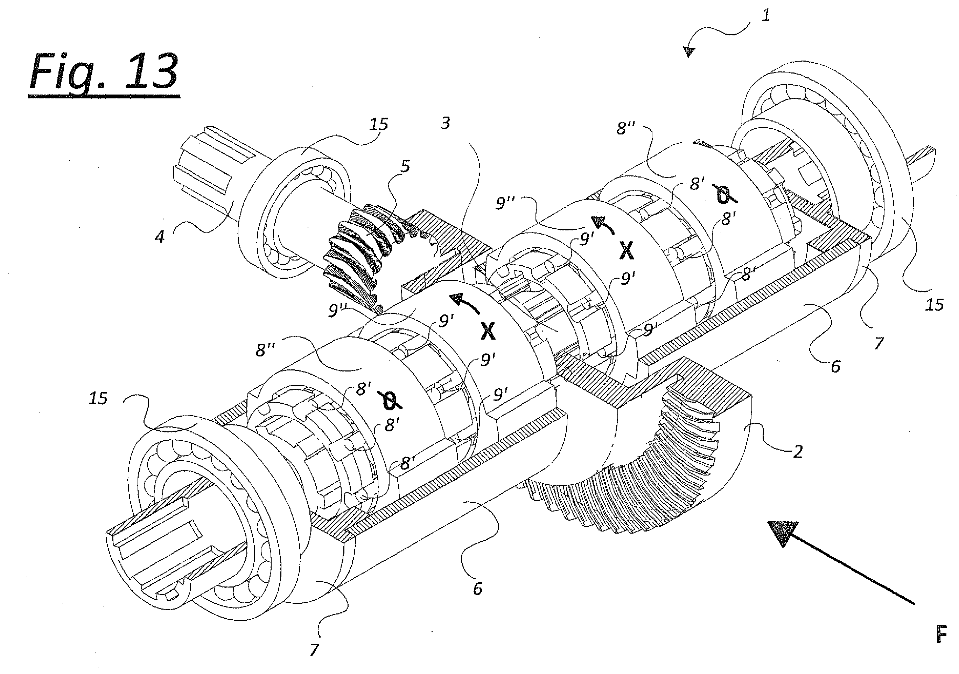

Fig. 13 zeigt die erfindungsgemäße Antriebsschlupfsperre im Schiebebetrieb vorwärts. Das Fahrzeug bewegt sich ohne Antrieb in Fahrtrichtung F. Über die Bodenhaftung der Räder wird das Tellerrad 2 und mit ihr die Sperrwelle 3 entsprechend der Fahrtrichtung F gedreht. Die Klemmrollen 9' werden dabei - genauso wie bei einer Rückwärtsfahrt aufgrund des Antriebs - in die Klemmstellungen (Sperrpositionen) geführt. Die Überholkupplungen 9 sperren gegen die Schubrichtung. Die Schubkraft vorwärts wird abgefangen. Bei Schiebebetrieb in Bogenfahrt vorwärts gilt analog das zu Fig. 12 Ausgeführte.

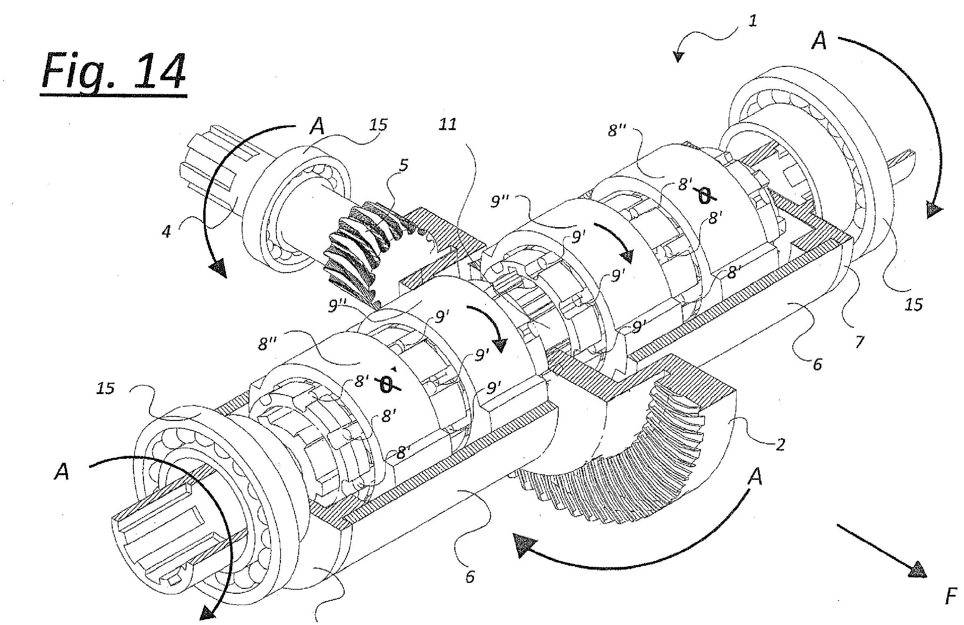

Für die in den Figuren 14, 15 und 16 dargestellten Fahrsituationen (Geradeausfahrt rückwärts, Bogenfahrt rückwärts und Schiebebetrieb rückwärts) gilt analog das zu den Figuren 11, 12 und 13 Ausgeführte.

Bei Geradeausfahrt rückwärts gemäß Fig. 14 treibt die Drehung der Antriebswelle 4 in Antriebsrichtung A über das Tellerrad 2 die nicht sichtbare Sperrwelle 3 und mit ihr die ebenfalls nicht sichtbaren Sterne 8"' und 9"' der Überholkupplungen 8, 9 ebenfalls in Antriebsrichtung A. Die Klemmrollen 9' rollen zwischen den Käfigen 9" und den nicht dargestellten Sternen 9""" in Klemmstellung (Sperrposition). Die Käfige 9" werden nun in Antriebsrichtung A (rückwärts) gedreht und mit ihnen die Hohlwellen 6 und die Steckverbindungen 7 der Halbachswellen. Die Überholkupplungen 8 befinden sich im Freilauf Ø. Das Fahrzeug bewegt sich in Fahrtrichtung F, hier rückwärts. Durch die beiderseits des Tellerrades 2 angeordneten rückwärts sperrenden Überholkupplungen 9 wird eine Starrachse hergestellt. Einseitiger Schlupf eines Antriebsrades ist dadurch auch bei Rückwärtsfahrt ausgeschlossen.

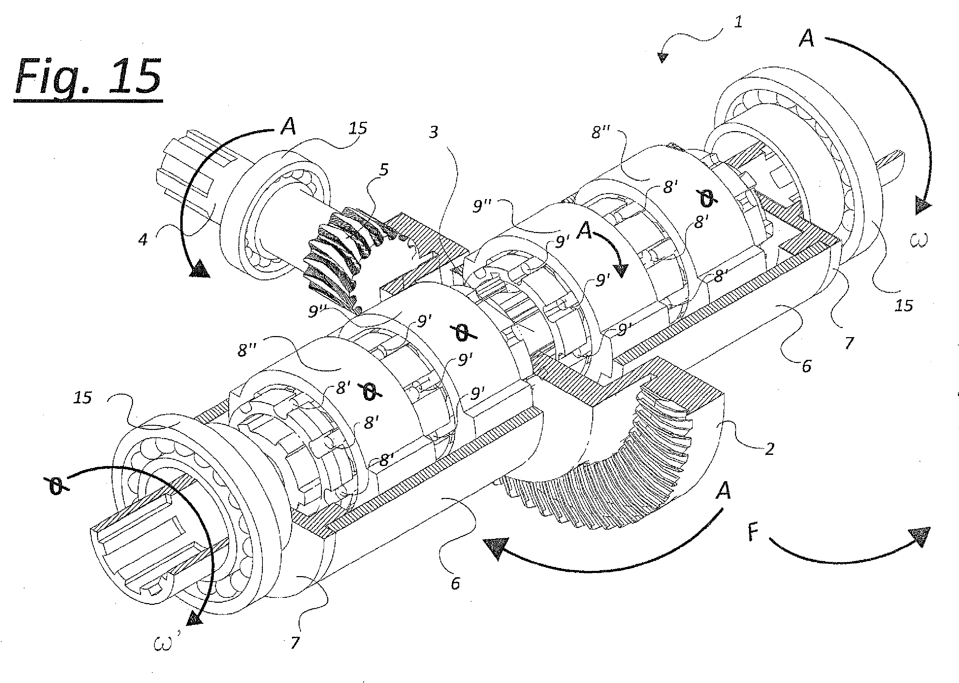

Fig. 15 zeigt die erfindungsgemäße Antriebsschlupfsperre 1 bei Bogenfahrt rückwärts. Wieder drehen die Antriebswelle 4 und mit ihr das Tellerrad 2 in Antriebsrichtung A. Der Antrieb wirkt über die bogeninnere (rechte) Überholkupplung 9 auf die bogeninnere (rechte) Hohlwelle 6 der Halbachswelle, die nun mit der Winkelgeschwindigkeit ω dreht. Das bogenäußere (rlinke) Rad wird von der Bodenhaftung mit der größeren Winkelgeschwindigkeit ω' geführt. Dadurch wird die bogenäußere (linke) Überholkupplung 9 gelöst; sie befindet sich im Freilauf Ø. Die Klemmrollen 9' der bogeninneren (rechten) Überholkupplung 9 haben die Klemmrollen 8' der bogeninneren (rechten) Überholkupplung 8 bis zum Erreichen der Klemmstellung (Sperrposition) der Klemmrollen 9' gegen die Antriebsrichtung A geführt, wodurch über die Schaltwelle 11 und die Mitnehmer 10 auch die bogenäußere (linke) Überholkupplung 8 in gelöster Stellung gehalten wird. Die bogenäußere (linke) Überholkupplung 8 befindet sich daher ebenfalls im Freilauf ∅ und damit die gesamte bogenäußere (linke) Halbwelle 6, 7.

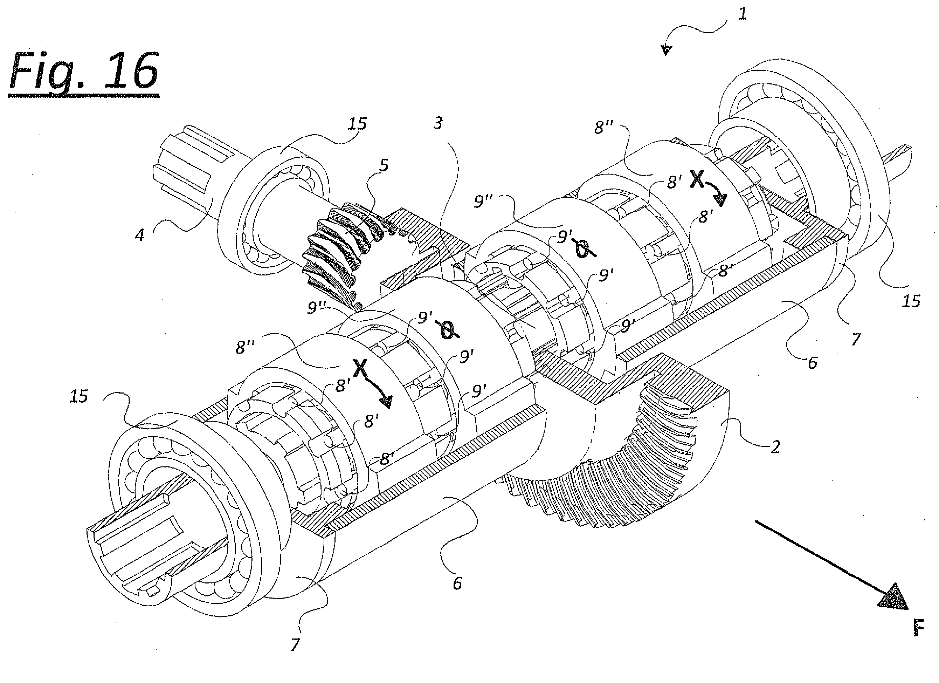

Fig. 16 zeigt die erfindungsgemäße Antriebsschlupfsperre im Schiebebetrieb rückwärts. Das Fahrzeug bewegt sich ohne Antrieb in Fahrtrichtung F. Über die Bodenhaftung der Räder wird das Tellerrad 2 und mit ihr die Sperrwelle 3 entsprechend der Fahrtrichtung F gedreht. Die Klemmrollen 8' werden dabei - genauso wie bei einer Vorwärtsfahrt aufgrund des Antriebs - in die Klemmstellungen (Sperrpositionen) geführt. Die Überholkupplungen 8 sperren gegen die Schubrichtung. Die Schubkraft rückwärts wird abgefangen. Bei Schiebebetrieb in Bogenfahrt vorwärts gilt analog das zu Fig. 15 Ausgeführte.

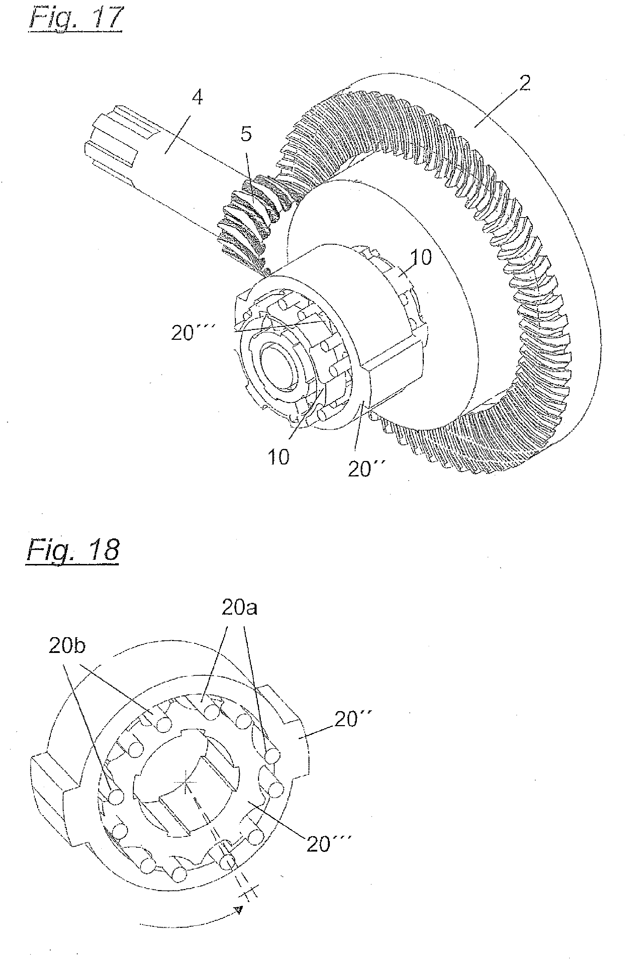

In Fig. 17 ist eine alternative Ausführungsform der Überholkupplungen aus Fig. 8 dargestellt.

Gemäß Fig. 8 weist eine vorwärts sperrende Überholkupplung 8 mit Klemmrollen 8' immer einen eigenen Stern 8"' auf, dessen Ausnehmungen sich - in Umfangsrichtung des Sterns 8"' gesehen - alle in die gleiche Richtung (zur Sperrposition hin) verjüngen. Für die rückwärts sperrende Überholkupplung 9 kann ein baugleicher Stern 8"' verwendet werden, er muss nur um 180° gedreht auf der Sperrwelle montiert werden. Damit verjüngen sich die Ausnehmungen für die Klemmrollen 9' dann in die andere Richtung als bei der vorwärts sperrenden Überholkupplung 8.

Nach der Ausführung nach Fig. 17 bzw. Fig. 18 ist es aber auch möglich, für die beiden in entgegengesetzte Richtung sperrenden Überholkupplungen 8, 9 einer Halbachswelle einen einzigen Stern 20"' zu verwenden, bei dem sich - in Umfangsrichtung gesehen - aufeinanderfolgende Ausnehmungen für die Klemmrollen immer in entgegengesetzte Richtungen verjüngen. Das heißt also bei einer geraden Anzahl von Klemmrollen bzw. Ausnehmungen des Sterns 20"' bildet jede 1,. 3., 5., ... Ausnehmung für die Klemmrollen 20a (derzeit im Freilauf) die vorwärts sperrende Überholkupplung, während jede 2., 4., 6., ... Ausnehmung für die Klemmrollen 20b (derzeit in Sperrposition, Versatz zu Freilauf ist strichliert eingezeichnet) dann die rückwärts sperrende Überholkupplung bildet. Sowohl vorwärts sperrende Überholkupplung als auch rückwärts sperrende Überholkupplung weisen einen gemeinsamen Stern 20"' und einen gemeinsamen Käfig 20" auf. Damit muss nur mehr ein Mitnehmer 10 links und rechts neben jedem Stern 20"' angeordnet werden. Diese Ausführung spart gegenüber jener aus Fig. 8 somit nicht nur Material und Gewicht bei den Überholkupplungen, sondern auch bei den Mitnehmern 10.

Die erfindungsgemäße Antriebsschlupfsperre ersetzt ein Ausgleichsgetriebe.

Die Antriebsschlupfsperre ist mit elektronischen Fahrstabilitätsprogrammen kompatibel.

Auch bei Fahrbahnverhältnissen mit unterschiedlichen Reibwerten an den Antriebsrädern ("m-split") bleibt die Vortriebskraft des Fahrzeuges voll erhalten.

Giereffekte durch verschiedene Antriebsmomente und sich daraus ergebende Schleudertendenzen des Fahrzeuges werden vermieden.

In jeder Fahrsituation behalten beide Antriebsräder ihre Seitenführungskräfte.

### BEZUGSZEICHENLISTE

- A: Antriebsrichtung
- F: Fahrtrichtung des Fahrzeuges
- ∅: Freilauf
- ω: Winkelgeschwindigkeit des bogeninneren Rades
- ω': Winkelgeschwindigkeit des bogenäußeren Rades
- 1: Antriebsschlupfsperre
- 2: Tellerrad
- 3: Sperrwelle
- 4: Antriebswelle
- 5: Triebling
- 6: Hohlwelle der Halbachswelle
- 7: Steckverbindung der Halbachswelle
- 8: Überholkupplung mit Sperre gegen die Antriebsrichtung vorwärts, kurz vorwärts sperrend
8' Klemmrolle
8" Käfig
8"' Stern
- 9: Überholkupplung mit Sperre gegen die Antriebsrichtung rückwärts, kurz rückwärts sperrend
9' Klemmrolle
9" Käfig
9"' Stern
- 10: Mitnehmer
- 11: Schaltwelle
- 12: Bolzen
- 13: Schlitz
- 14: Aufnahme für Klemmrollen 8', 9'
- 15: Wälzlager
- 16: Schaltwellenanordnung
- 17: Federn
- 18: Sperrwellenanordnung
- 19: Aufnahme für Bolzen 12
- 20a: Klemmrolle für vorwärts sperrende Überholkupplung
- 20b: Klemmrolle für rückwärts sperrende Überholkupplung
- 20": Käfig für vorwärts und rückwärts sperrende Überholkupplung
- 20"': Stern für vorwärts und rückwärts sperrende Überholkupplung

## Patentansprüche

1. Mechanische Schlupfsperre für Antriebsräder von mehrspurigen Fahrzeugen, umfassend
- zumindest eine rotierbare, insbesondere als Hohlwelle ausgebildete Sperrwelle (3), die von einem Antrieb des Fahrzeugs antreibbar ist,
- zwei zur Sperrwelle (3) koaxiale Halbachswellen (6, 7), wobei eine Halbachswelle (6, 7) jeweils ein Antriebsrad antreiben kann,
- für jede Halbachswelle (6, 7) zwei zur Sperrwelle (3) koaxiale Überholkupplungen (8, 9), welche in entgegengesetzten Drehrichtungen sperren, wobei die Überholkupplungen (8, 9) jeweils die Verbindung ihrer Halbachswelle zur antreibenden Sperrwelle (3) bilden und wobei die Sperrpositionen der vorwärts sperrenden Überholkupplungen (8) gegenüber jenen der rückwärts sperrenden Überholkupplungen (9) versetzt sind,
- eine mechanische Schaltvorrichtung (10, 11, 12) als Verbindung zwischen den vorwärts sperrenden (8) und rückwärts sperrenden (9) Überholkupplungen, welche sicherstellt, dass die rückwärts sperrenden Überholkupplungen (9) in gelöster Stellung gehalten werden, solange zumindest eine der vorwärts sperrenden Überholkupplungen (8) aufgrund des Antriebs durch die Sperrwelle (3) gesperrt ist und dass die vorwärts sperrenden Überholkupplungen (8) in gelöster Stellung gehalten werden, solange zumindest eine rückwärts sperrende Überholkupplung (9) aufgrund des Antriebs durch die Sperrwelle (3) gesperrt ist.

2. Mechanische Schlupfsperre nach Anspruch 1, **dadurch gekennzeichnet, dass** die Überholkupplungen (8, 9) Kupplungselemente (8', 9') aufweisen, welche die zugehörige Überholkupplung (8, 9) überragen und dass die mechanische Schaltvorrichtung (10, 11, 12) neben den Überholkupplungen (8, 9) koaxial zur Sperrwelle (3) angeordnete, dieser gegenüber bewegliche Mitnehmer (10) aufweist, welche alle über eine zur Sperrwelle (3) koaxiale Schaltwelle (11) starr miteinander verbunden sind, wobei die Mitnehmer (10) für die überragenden Bereiche der Kupplungselemente (8', 9') Aufnahmen (14) aufweisen, welche die Kupplungselemente (9') der rückwärts sperrenden Überholkupplungen (9) in gelöster Stellung halten, solange zumindest die Kupplungselemente (8') einer vorwärts sperrenden Überholkupplung (8) aufgrund des Antriebs durch die Sperrwelle (3) in Sperrposition sind und welche auch umgekehrt die Kupplungselemente (8') der vorwärts sperrenden Überholkupplungen (8) in gelöster Stellung halten, solange zumindest die Kupplungselemente (9') einer rückwärts sperrenden Überholkupplung (9) aufgrund des Antriebs durch die Sperrwelle (3) in Sperrposition sind.

3. Mechanische Schlupfsperre nach Anspruch 2, **dadurch gekennzeichnet, dass** in zumindest einem Mitnehmer (10) so viele Aufnahmen (14) vorgesehen sind wie eine Überholkupplung (8, 9) Kupplungselemente (8', 9') hat und die Aufnahmen (14) - in Umfangsrichtung der Mitnehmer (10) gesehen - kürzer sind als der Versatz der Sperrpositionen zwischen Kupplungselementen (8', 9') der vorwärts (8) und der rückwärts (9) sperrenden Überholkupplungen.

4. Mechanische Schlupfsperre nach Anspruch 2 oder 3, **dadurch gekennzeichnet, dass** die Aufnahmen (14) kreisbogenförmig sind, wobei der Radius des Kreisbogens von der Drehachse des Mitnehmers (10) ausgeht.

5. Mechanische Schlupfsperre nach Anspruch 2 oder 3 oder 4, **dadurch gekennzeichnet, dass** an beiden Seiten jeder Überholkupplung (8, 9) zumindest ein Mitnehmer (10) angeordnet ist.

6. Mechanische Schlupfsperre nach Anspruch 4, **dadurch gekennzeichnet, dass** zwischen den beiden Überholkupplungen (8, 9) einer Halbachswelle (6, 7) genau ein Mitnehmer (10) angeordnet ist, dessen Aufnahmen (14) jeweils ein Kupplungselement (8', 9') der vorwärts sperrenden (8) und der rückwärts sperrenden (9) Überholkupplung aufnimmt.

7. Mechanische Schlupfsperre nach einem der Ansprüche 1 bis 6, **dadurch gekennzeichnet, dass** die Schaltwelle (11) innerhalb der Sperrwelle (3) angeordnet ist und mittels radial abstehender, durch radiale Schlitze in der Sperrwelle (3) durchgreifende Bolzen (12), welche in die Mitnehmer (10) ragen, alle Mitnehmer starr miteinander verbindet.

8. Mechanische Schlupfsperre nach Anspruch 7, **dadurch gekennzeichnet, dass** pro Mitnehmer (10) zwei gegeneinander um 180° versetzte Bolzen (12) vorgesehen sind.

9. Mechanische Schlupfsperre nach einem der Ansprüche 1 bis 8, **dadurch gekennzeichnet, dass** jede Überholkupplung (8, 9) als inneren, mit der Sperrwelle (3) fest verbundenen rotierenden Teil einen Stern (8"', 9"') aufweist, in dessen Ausnehmungen, die sich in gleicher Richtung verjüngen, sich die als Klemmrollen (8, 9) ausgebildeten Kupplungselemente befinden, die mittels Federn (17) gegen den als Käfig (8", 9") ausgebildeten, mit der Hohlwelle (6) der Halbachswelle fest verbundenen äußeren rotierenden Teil der Überholkupplung gedrückt werden.

10. Mechanische Schlupfsperre nach einem der Ansprüche 1 bis 8, **dadurch gekennzeichnet, dass** vorwärts sperrende (8) und rückwärts sperrende (9) Überholkupplung einer Halbachswelle (6, 7) als inneren, mit der Sperrwelle (3) fest verbundenen rotierenden Teil einen gemeinsamen Stern (20"') aufweisen, dessen aufeinanderfolgende Ausnehmungen sich in entgegengesetzter Richtung verjüngen und in denen sich die als Klemmrollen (20a, 20b) ausgebildeten Kupplungselemente befinden, die mittels Federn (17) gegen den als gemeinsamen Käfig (20") ausgebildeten, mit der Hohlwelle (6) der Halbachswelle fest verbundenen äußeren rotierenden Teil gedrückt werden.
